(19) Europäisches Patentamt
European Patent Office
Office européen des brevets

(11) Veröffentlichungsnummer: **0 289 729 B1**

(12) **EUROPÄISCHE PATENTSCHRIFT**

(45) Veröffentlichungstag der Patentschrift: **21.11.91**

(51) Int. Cl.5: **F16B 13/06**

(21) Anmeldenummer: **88103111.6**

(22) Anmeldetag: **02.03.88**

(54) **Befestigungselement.**

(30) Priorität: **27.04.87 DE 3714025**

(43) Veröffentlichungstag der Anmeldung:
**09.11.88 Patentblatt 88/45**

(45) Bekanntmachung des Hinweises auf die
Patenterteilung:
**21.11.91 Patentblatt 91/47**

(84) Benannte Vertragsstaaten:
**AT BE CH ES FR GB GR IT LI NL SE**

(56) Entgegenhaltungen:
**AT-B- 336 239**
**DE-A- 2 632 487**
**DE-A- 3 115 040**

(73) Patentinhaber: **fischerwerke Artur Fischer
GmbH & Co. KG
Weinhalde 14 - 18
W-7244 Waldachtal 3/Tumlingen(DE)**

(72) Erfinder: **Fischer, Artur, Prof. Dr. h. c.
Weinhalde 34
W-7244 Waldachtal 3/Tumlingen(DE)**

## Beschreibung

Die Erfindung betrifft ein Befestigungselement zum Einsetzen in Bohrlöcher eines Mauerwerks gemäß dem Uberbegriff von Anspruch 1.

Es sind Befestigungselemente bekannt, die im wesentlichen aus einem Gewindebolzen, einer Spreizhülse und einem in die Spreizhülse einziehbaren Spreizkörper bestehen. Der Spreizkörper ist dabei üblicherweise als Spreizkonus ausgebildet. Die Spreizhülse besitzt Längsschlitze, die beim Einziehen des Spreizkörpers ein Aufspreizen der Spreizhülse ermöglichen. Am anderen Ende kann das Befestigungselement als Gewindebolzen ausgebildet sein, an dem mittels einer Mutter ein gewünschter Gegenstand festschraubbar ist. Beim Drehen der Mutter wird der Gewindebolzen nach außen aus dem Bohrloch und gleichermaßen der Spreizkörper in die Spreizhülse gezogen. Dabei wird die Spreizhülse aufgespreizt und das Befestigungselement im Bohrloch verankert.

Aus der DE-A-3 115 040 ist ein Befestigungselement bekannt, das ein Gewindeelement aufweist, an dessen vorderen Ende eine Gewindehülse als Anschlag aufgeschraubt ist. Unmittelbar auf dem Anschlag sitzt die durch Riegelelemente gebildete Spreizhülse, in die zu deren Aufspreizung ein auf dem Gewindeelement axial verschiebbarer Spreizkörper eindrückbar ist. Zum Verankern des bekannten Befestigungselementes wird durch Aufdrehen einer sich an der Mauerwerksaußenfläche abstützenden Mutter auf das Gewindeelement der mit dem Gewindeelement verbundene Anschlag in Richtung Bohrlochmündung bewegt. Dabei wird die Spreizhülse auf den sich über eine Schraubenfeder und Distanzhülse am zu befestigenden Gegenstand abstützenden Spreizkörper aufgeschoben, so daß durch den am Spreizkörper angeordneten Spreizkonus die Riegelelemente der Spreizhülse in eine Hinterschneidung der Bohrlochwandung aufgespreizt werden. Die Schraubenfeder als Abstützung für den Spreizkörper hat die Aufgabe, den Spreizkörper beispielsweise bei einem sich durch Rißbildung erweiternden Bohrloch nachzudrücken, um die volle Aufspreizung zu erhalten.

Treten an dem in ein Bohrloch eingesetzten bekannten Befestigungselement momentane Überbelastungen bzw. Schockbelastungen auf, die durch heftige Erschütterungen oder Erdbeben erzeugt werden können, so werden die Überbelastungen über den Anschlag direkt auf die Riegelelemente der Spreizhülse und von denen unmittelbar in das Mauerwerk eingeleitet. Die dabei auftretenden Stoßbelastungen können sofort zu einem Ausbruch des Befestigungselementes oder zu einer Schädigung des Mauerwerks durch Haarrisse führen, was eine erhebliche Reduzierung des Haltewertes bewirkt.

Der Erfindung liegt die Aufgabe zugrunde, ein Befestigungselement zu schaffen, welches in der Lage ist, Stoßbelastungen zu absorbieren.

Die Lösung dieser Aufgabe wird bei einem Befestigungselement der eingangs genannten Gattung durch die im kennzeichnenden Teil des Anspruchs 1 angegebenen Merkmale erreicht.

Beim Einsetzen des Befestigungselementes in ein Bohrloch wird die zum Aufspreizen der Spreizhülse erforderliche Kraft über die sich am Anschlag abstützende Schraubenfeder auf den Spreizkörper übertragen. Beim Aufdrehen der Mutter auf das Gewindeelement entsteht eine die Schraubenfeder spannende und damit auf den Spreizkörper wirksam werdende und die Spreizhülse aufspreizende Zugkraft. Treten nun beispielsweise infolge eines Erdbebens Erschütterungen auf, so erzeugt ein mittels des Befestigungselementes am Mauerwerk befestigter Gegenstand aufgrund seines Eigengewichts Stoßbelastungen, die als stoßförmige Zugkräfte am Befestigungselement wirksam werden, insbesondere dann, wenn das Befestigungselement in die Decke eines Mauerwerks eingesetzt ist. Die Stoßbelastungen werden vom Kraftspeicher federnd aufgenommen, so daß keine harten Stöße auf den Spreizkörper und die Spreizhülse und damit auf das Mauerwerk übertragen werden. Die Federkonstante der Schraubenfeder muß demzufolge so groß sein, daß der mit dem Befestigungselement befestigte Gegenstand aufgrund seines Eigengewichts den Kraftspeicher nicht über seine Elastizitätsgrenze hinaus belastet. Ein derart ausgebildetes Befestigungselement absorbiert hohe Stoßbelastungen und ist somit auch für den Einsatz in erdbebengefährdeten Gebieten geeignet.

Der Abschnitt kann als Gewindestange ausgebildet sein, die in ein Innengewinde des Gewindeelements eingeschraubt ist. Auf diese Weise läßt sich das Befestigungselement auf einfache Weise zusammensetzen, wobei vor dem Einschrauben der Gewindestange die Schraubenfeder, der Spreizkörper, die Spreizhülse und ggf. ein Fixierelement auf den Abschnitt aufgeschoben werden. Mit dem Fixierelement, beispielsweise einem Federring, wird die Spreizhülse im Bohrloch fixiert.

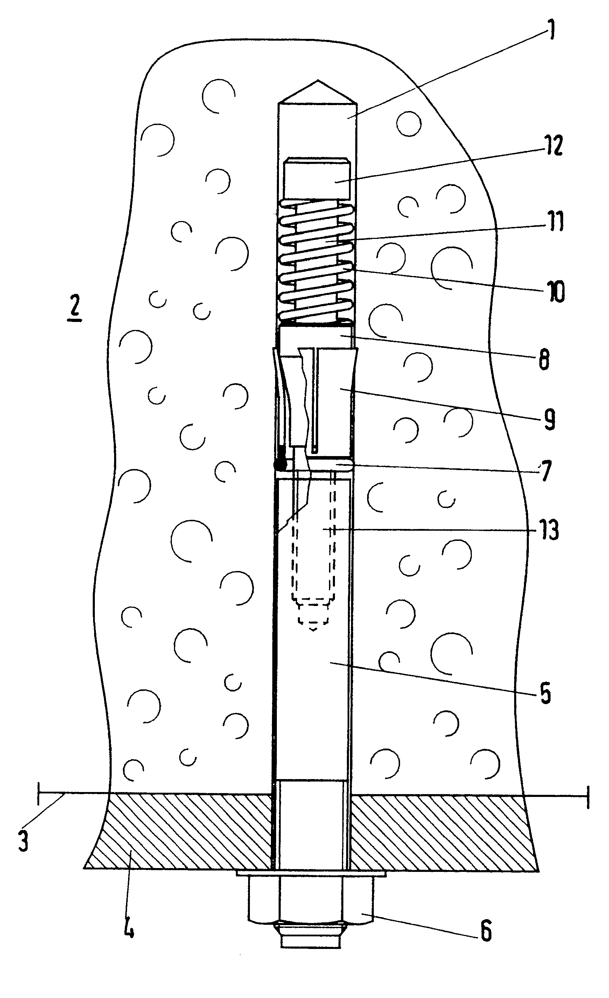

Die Erfindung wird nachfolgend anhand der Zeichnung, die ein Ausführungsbeispiel dargestellt, nähers erläutert.

Das in der Zeichnung dargestellte Befestigungselement ist in ein Bohrloch 1 eines Beton-Mauerwerks 2 eingesetzt und hält einen an der Decke 3 angeordneten Gegenstand 4. Das Bohrloch 1 ist hier mit unterbrochenen Linien dargestellt und als gerade verlaufendes Bohrloch ausgebildet.

Das Befestigungselement besteht aus einem Gewindebolzen 5 mit Mutter 6, einem als Fixierelement ausgebildeten Federring 7, einem Spreizkörper 8, der in eine Spreizhülse 9 eingreift, einer Schraube 10 und einem stabförmigen Abschnitt 11, der in einen Anschlag 12 an seinem Ende übergeht. Der stabförmige Abschnitt 11 ist als Gewinde ausgebildet und mit seinem Gewinde 13 in ein Innengewinde des Gewindebolzens 5 eingeschraubt. Der Federring 7 steht am Umfang des Befestigungselements über und greift somit mit hoher Federkraft an der Innenwand des Bohrlochs 1 an.

Wird die Mutter 6 angezogen, so bewirkt dies, daß der Gewindebolzen 5 und damit auch der Anschlag 12 nach unten gezogen wird. Die Federkraft, die von der Schraubenfeder 10 auf den Spreizkörper 8 übertragen wird, erhöht sich dadurch. Die Spreizhülse 9 ist mittels des Federrings 7 ortsfest im Bohrloch 1 gehalten, so daß eine Erhöhung der auf den Spreizkörper 8 wirkenden Kraft eine entsprechend höhere Spreizkraft erzeugt. Die in der Zeichnung dargestellte Spreizhülse 9 ist bereits geringfügig aufgespreizt.

Das Bohrloch 1 kann im Bereich der Spreizhülse 9 konisch ausgerieben sein, wodurch ein besonders starkes Aufspreizen der Spreizhülse 9 ermöglicht wird. Dadurch erhält man eine formschlüssige Verbindung zwischen Befestigungselement und dem Mauerwerk 2.

Treten nun Stoßbelastungen im Bereich des als Gewindebolzen 5 ausgebildeten Gewindeelementes auf, so wird dadurch der Anschlag 12 entsprechend stoßartig nach unten gezogen. Da jedoch zwischen Spreizkörper 8 und Anschlag 12 ein elastischer Kraftspeicher in Form einer Schraubenfeder 10 angeordnet ist, werden die auftretenden Stöße elastisch aufgenommen, so daß auch größere Stoßbelastungen eine Verschiebung der Spreizhülse 9 innerhalb des Bohrloches 1 nicht bewirken können.

Als Gewindeelement kann anstelle des Gewindebolzens 5 auch ein Bolzen mit beidseitigem Innengewinde dienen, wobei dann die Mutter 6 durch eine in ein Innengewinde eingreifenden Schraube zu ersetzen ist. Es ist weiterhin auch möglich, das Gewinde 13 durch eine Hülse aus dem Bohrloch 1 herauszuführen. Die Mutter 6 müßte in diesem Fall einen entsprechend reduzierten Gewindedurchmesser haben.

## Patentansprüche

1. Befestigungselement zum Einsetzen in Bohrlöcher eines Mauerwerks mit einem sich an einer Schraubenfeder (10) abstützenden Spreizkörper (8), einer den Spreizkörper umschließenden, im Bohrloch fixierbaren Spreizhülse (9) und einem an einem Ende Mittel zum Befestigen eines Gegenstandes und am anderen Ende einen Anschlag (12) aufweisenden Gewindeelement (5), wobei über den Anschlag eine am Gewindeelement über die Schraubenfeder angreifende Zugkraft die Aufspreizung der Spreizhülse bewirkt, **dadurch gekennzeichnet,** daß das Gewindeelement (5) unmittelbar vor dem Anschlag (12) einen Abschnitt (11) mit reduziertem Durchmesser aufweist, wobei der Anschlag (12) bundartig ausgebildet ist, und auf dem Abschnitt (11) der Spreizkörper (8) und die Spreizhülse (9), sowie zwischen dem Anschlag (12) und dem Spreizkörper (8) die Schraubenfeder (10) angeordnet sind.

2. Befestigungselement nach Anspruch 1, **dadurch gekennzeichnet,** daß der Abschnitt (11) als Gewindestange ausgebildet und in ein Innengewinde des Gewindeelementes (5) eingeschraubt ist.

3. Befestigungselement nach Anspruch 1 oder 2, **dadurch gekennzeichnet,** daß zwischen Gewindeelement (5) und Spreizhülse (9) ein Federring (7) angeordnet ist, der am Umfang des Befestigungselements federnd übersteht.

## Claims

1. Fixing element for insertion in holes drilled in masonry, having an expander body (8) supporting itself against a helical spring (10), an expansible sleeve (9) which surrounds the expander body and can be fixed in the drilled hole, and a threaded element (5) having at one end means for fixing an article and at the other end a stop member (12), wherein by way of the stop member a tractive force acting on the threaded element by way of the helical spring causes the expansible sleeve to expand, characterized in that, immediately in front of the stop member (12), the threaded element (5) has a portion (11) of reduced diameter, the stop member (12) being of collar-like construction, and the expander body (8) and the expansible sleeve (9) are arranged on the portion (11), and the helical spring (10) is arranged between the stop member (12) and the expander body (8).

2. Fixing element according to claim 1, characterized in that the portion (11) is in the form of a screw rod and is screwed into an internal thread of the threaded element (5).

3. Fixing element according to claim 1 or 2, characterized in that between the threaded element (5) and the expansible sleeve (9) there is arranged a spring ring (7) which projects resiliently beyond the circumference of the fixing element.

## Revendications

1. Elément de fixation destiné à être mis en place dans des trous forés dans une maçonnerie, cet élément comportant un corps (8) d'expansion qui s'appuie sur un ressort hélicoïdal (10), une douille expansible (9) qui entoure le corps d'expansion et qui peut être fixée dans le trou foré, et un élément fileté (5) présentant à une extrémité des moyens de fixation d'un objet, et à l'autre extrémité une butée (12), une force de traction qui s'exerce par l'intermédiaire du ressort hélicoïdal sur l'élément fileté, par l'intermédiaire de la butée, provoquant l'expansion de la douille expansible, élément caractérisé en ce que l'élément fileté (5) présente immédiatement avant la butée (12) un tronçon (11) de diamètre réduit, la butée (12) ayant la forme d'un collet,et par le fait que sur le tronçon (11) sont disposés le corps (8) d'expansion et la douille expansible (9), et que le ressort hélicoïdal (10) est disposé entre la butée (12) et le corps (8) d'expansion.

2. Elément de fixation selon la revendication 1, caractérisé en ce que le tronçon (11) est conformé en tige filetée et qu'il est vissé dans un filetage intérieur de l'élément fileté (5).

3. Elément de fixation selon la revendication 1 ou 2, caractérisé en ce qu'entre l'élément fileté (5) et la douille expansible (9) est disposée une bague (7) élastique, qui dépasse avec effet de ressort à la périphérie de l'élément de fixation.